# EUROPÄISCHE PATENTANMELDUNG

(11) **EP 1 655 530 A2**
(43) Veröffentlichungstag der Anmeldung: **10.05.2006**
(21) Anmeldenummer: 05022833.7
(22) Anmeldetag: 20.10.2005
(51) Int. Cl.: F16L 59/065, F16L 59/04

(54) **Thermische Isolierung zur Reduzierung von Wärmeverlusten und Energieverbrauch bei Hochtemperaturanlagen**

(30) Priorität: 05.11.2004 DE 102004053435
(71) Anmelder: Forschungszentrum Jülich GmbH, 52425 Jülich (DE)
(72) Erfinder: Mahnke, Reinhold, 52457 Aldenhoven (DE)

(57) **Zusammenfassung**

Die Erfindung betrifft eine thermische Isolierung zur Reduzierung von Wärmeverlusten und Energieverbrauch bei Hochtemperaturanlagen in kontrollierter Atmosphäre gekennzeichnet durch ein evakuiertes Gehäuse (1) aus hitzebeständigem inertem Material, das zur thermischen Isolierung innerhalb eines Rezipienten (4) mit seiner äußeren Formgebung an die innere Formgebung des Rezipienten (4) angepasst ist sowie eine Ofenanlage enthaltend die erfindungsgemäße Isolierung.

## Beschreibung

Die Erfindung betrifft eine thermische Isolierung zur Reduzierung von Wärmeverlusten und Energieverbrauch bei Hochtemperaturanlagen in kontrollierter Atmosphäre sowie eine Ofenanlage enthaltend die erfindungsgemäße Isolierung.

Um Reaktionen von Gegenständen, Komponenten oder Probematerialien, die bei hohen Temperaturen von beispielsweise ≥ 500°C einer kontrollierten Gasatmosphäre (z.B. Inertgas, Vakuum, Reaktionsgase) ausgesetzt werden, mit den Rezipienten zu vermeiden, werden die Wärmebehandlungen z. B in Rohren aus Quarz oder Al-Oxid durchgeführt.

Ein wesentliches Problem bei den nach dem Stand der Technik bekannten Anordnungen ist die thermische Isolierung des Rezipienten mit den Verbindungsstellen zu den Vakuum- bzw. Gaszufuhrleitungen. Unter Rezipient wird im Rahmen der vorliegenden Erfindung ein Reaktionsraum verstanden, in dem die gewünschte Reaktionstemperatur sowie die gewünschte Atmosphäre eingestellt wird. Abhängig von den jeweiligen Anwendungen werden die Verbindungsstellen zu den Vakuum- bzw. Gaszufuhrleitungen mit organischem Kleber oder Dichtmaterialien wie z. B. Gummi, O-Ringe, angefertigt. Diese konventionellen Dichtungsmethoden setzen voraus, dass die Temperatur der Dichtungsstelle eine Temperatur von etwa 200°C nicht übersteigt. Wegen Wärmeleitung und Wärmestrahlung aus der Ofenanlage wird dies nach dem Stand der Technik nur mit folgenden Methoden erreicht:
A) Die Verbindungsstelle wird sehr weit vom heißen Ofen entfernt angeordnet
B) Mit aufwendigen Methoden wird die Verbindungsstelle z. B. mit Gas oder Wasser gekühlt.

Methode A) führt zu sehr großem Platzbedarf der Anlage und hohem Kostenaufwand. Methode B) hat neben höherem Kostenaufwand zusätzlich einen höheren Energie- und/oder Gas/Wasserverbrauch zur Folge.

Es ist daher Aufgabe der Erfindung, eine Isolierung zu schaffen, mit der eine gegenüber bisher bekannten Anlagen kostengünstigere Hochtemperaturanlage in kontrollierter Atmosphäre mit einem geringeren Platzbedarf konstruiert werden kann. Es ist weiterhin Aufgabe der Erfindung, eine Ofenanlage für Hochtemperaturprozesse unter kontrollierter Atmosphäre zu schaffen, die gegenüber bekannten Ofenanlagen einen geringeren Kostenaufwand sowie geringeren Platzbedarf aufweist.

Ausgehend vom Oberbegriff des Anspruchs 1 wird die Aufgabe erfindungsgemäß gelöst mit den im kennzeichnenden Teil des Anspruchs 1 angegebenen Merkmalen. Weiterhin wird die Aufgabe ausgehend vom Oberbegriff des Anspruchs 9 erfindungsgemäß gelöst mit den im kennzeichnenden Teil des Anspruchs 9 angegebenen Merkmalen.

Mit der erfindungsgemäßen Isolierung sowie der Ofenanlage ist es nunmehr möglich, mit weniger Energieaufwand die gewünschte Temperatur im Rezipienten zu erreichen, und z. B. die Verbindungsstellen des Rezipienten mit den Vakuum- bzw. Gaszufuhrleitungen oder andere temperaturempfindliche Stellen der Ofenanlage gleichzeitig vor zu hohen Temperaturen, die beispielsweise oberhalb von ca. 200°C liegen zu schützen. Durch die erfindungsgemäße Isolierung wird es weiterhin möglich, eine Verkürzung des Rezipienten im Bereich außerhalb des Ofens zu erreichen und damit eine konstruktive Vereinfachung zu erzielen. Darüber hinaus wird es mit der erfindungsgemäßen Isolierung möglich, erheblich höhere Einsatztemperaturen einzustellen wie z. B. statt 800°C nunmehr beispielsweise 1000°C.

Vorteilhafte Weiterbildungen sind in den Unteransprüchen angegeben.

Die Zeichnungen zeigen eine beispielhafte Ausführungsform der erfindungsgemäßen Vorrichtung und des Verfahrens.

Es zeigt:
- Fig. 1:: Seitenansicht einer erfindungsgemäßen thermischen Isolierung
- Fig. 2:: Schematische Darstellung einer Ofenanlage für Wärmebehandlungen in kontrollierter Gasatmosphäre mit eingebauten erfindungsgemäßen thermischen Isolierungen

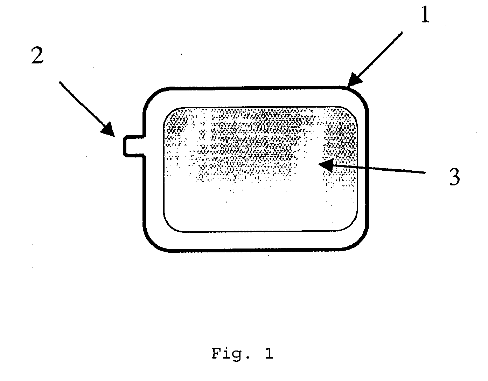

Figur 1 zeigt eine Seitenansicht einer erfindungsgemäßen thermischen Isolierung. Das evakuierte Gehäuse 1 weist einen Evakuierungsanschluss 2 auf. Im Inneren des Gehäuses kann sich eine Füllung aus isolierendem Material 3 wie z. B. Keramikwolle befinden.

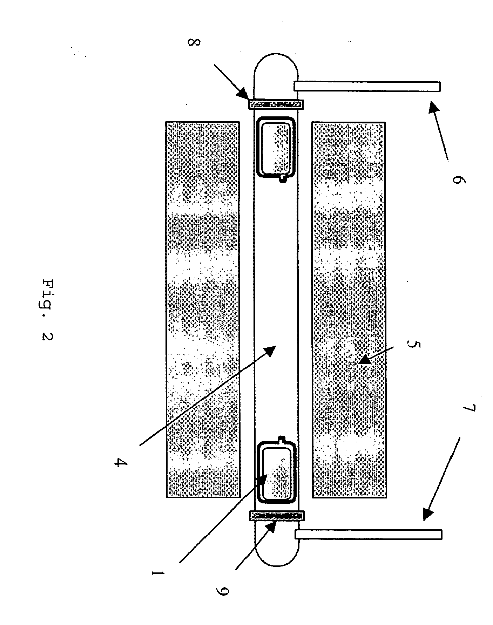

Figur 2 zeigt eine schematische Darstellung einer erfindungsgemäßen Ofenanlage für Wärmebehandlungen in kontrollierter Gasatmosphäre mit eingebauten erfindungsgemäßen thermischen Isolierungen. Der rohrförmig ausgestaltete Rezipient 4 wird von einem Ofen 5 umgeben. An den beiden Enden des Rezipienten 4 befinden sich jeweils Anschlüsse für den Gaseintritt 6 bzw. Gasaustritt 7 mit den dazugehörigen Verbindungsstellen 8 und 9 mit Abdichtungen zum Rezipienten 4. Die Verbindungsstellen 8 und 9 werden jeweils durch die eingebauten erfindungsgemäßen thermischen Isolierungen von der im Rezipienten 4 vorherrschenden Temperatur abgeschirmt.

Die vorliegende Erfindung betrifft eine thermische Isolierung, gekennzeichnet durch ein evakuiertes Gehäuse 1 aus einem hitzebeständigen inertem Material, das zur thermischen Isolierung innerhalb eines Rezipienten 4 mit seiner äußeren Formgebung an die innere Formgebung des Rezipienten 4 angepasst ist. Als Werkstoffe für das Gehäuse 1 eignen sich hitzebeständige Materialien, die mit den jeweils zu untersuchenden Proben keine Reaktionen eingehen und nicht zu Verfälschungen der Messergebnisse führen. So eignet sich beispielsweise Keramik oder Quarzglas als Werkstoff für das Gehäusematerial, wobei Quarzglas sich als besonders geeignet erwiesen hat. Die äußere Formgebung des Gehäuses 1 sollte so ausgestaltet sein, dass eine einfache Zufuhr und Entnahme für die Verwendung im Rezipienten 4 möglich ist, so dass eine beliebige Formgebung des Gehäuses 1 möglich ist. Eine besonders gute thermische Isolierung ergibt sich, wenn die Oberflächen von Rezipient 4 und Gehäuse 1 über eine möglichst große Fläche miteinander in Kontakt stehen. Dies ist beispielsweise der Fall, wenn der Rezipient 4 rohrförmig ist und das dazu passende Gehäuse 1 zylinderförmig ausgestaltet ist. Es ist aber beispielsweise auch möglich, dass das Gehäuse 1 der thermischen Isolierung sich zum Inneren der Rezipienten 4 hin konisch verjüngt, oder eckig oder kugelförmig ausgestaltet ist. Das Volumen und die Größe des Gehäuses 1 können so vergrößert oder verkleinert werden, dass die gewünschte thermische Isolierung und Herabsetzung der Temperatur an der jeweiligen temperaturempfindlichen Stelle erreicht werden kann. Mit zunehmendem Volumen des Gehäuses 1 steigt auch die thermische Isolierung.
Mit der erfindungsgemäßen thermischen Isolierung kann so mit weniger Energieaufwand als bisher bei nach dem Stand der Technik bekannten Anlagen, die gewünschte Temperatur im Rezipienten 4 eingestellt werden und gleichzeitig temperaturempfindliche Stellen der Anordnung wie z. B. die Verbindungsstellen 8 und 9 des Rezipienten 4 mit den Vakuum- bzw. Gaszufuhrleitungen 6 und 7, vor zu hohen Temperaturen, die beispielsweise oberhalb von ca. 200°C liegen geschützt werden. Durch das evakuierte Gehäuse 1 wird eine kontaminationsfreie Isolierung erreicht. Durch die Anpassung der äußeren Form der thermischen Isolierung an die innere Form des Rezipienten 4, dichtet das Gehäuse 1 passgenau die temperaturempfindliche Stelle, wie z.B. die Verbindungsstellen 8 und 9 im Rezipienten 4 ab, die vor zu hohen Temperaturen geschützt werden sollen. Neben der Verwendung der erfindungsgemäßen thermischen Isolierung in Hochtemperaturanlagen, eignet sich die thermische Isolierung generell für alle Problemstellungen bei denen eine thermische Isolierung benötigt wird.

Eine vorteilhafte Ausführung der Vorrichtung umfasst eine kugel- oder zylinderförmige Formgebung des Gehäuses 1. Da Rezipienten 4 überwiegend eine rohrförmige Ausgestaltung aufweisen, kann durch die dazu passende kugel- oder zylinderförmige Formgebung des Gehäuses 1 eine optimal angepasste Abdichtung der temperaturempfindlichen Stellen, wie die Verbindungsstellen 8 und 9, durch die thermische Isolierung erreicht werden. Weiterhin wird durch diese vorteilhafte Ausgestaltung eine einfache Zufuhr bzw. Entnahme der thermischen Isolierungen in den Rezipienten 4 ermöglicht und beispielsweise ein Verkanten der thermischen Isolierung im Rezipienten 4 verhindert.

Eine weitere vorteilhafte Ausgestaltung der erfindungsgemäßen Vorrichtung ist gekennzeichnet durch eine teilweise oder komplette Füllung des Gehäuses 1 mit Isolierwolle 3. Als Isolierwolle 3 eignen sich hitzebeständige Materialien, die undurchlässig für Infrarotstrahlung sind. Dies kann beispielsweise Keramikwolle oder Quarzglaswolle sein, wobei sich Keramikwolle als besonders geeignet erwiesen hat. Durch die Füllung des Gehäuses 1 mit Isolierwolle 3 wird neben dem Vakuum eine zusätzliche Unterdrückung der Wärmestrahlung erreicht. Die Isolierwolle 3 wird dabei in vorteilhafter Weise locker aber ohne eine Bildung von Hohlräumen in das Gehäuse 1 gefüllt. So kann die Isolierwolle 3, die beispielsweise als Flies oder Matte zur Verfügung gestellt wird, in gerollter Form in das Gehäuse 1 gegeben werden.

In einer weiteren vorteilhaften Ausführung der erfindungsgemäßen thermischen Isolierung ist die äußere Oberfläche des Gehäuses 1 aufgeraut. Dies geschieht beispielsweise durch Sandstrahlung oder Glasperlbestrahlung, wobei sich die glasperlgestrahlte Oberfläche als besonders geeignet erwiesen hat. Auf Grund der angerauten Oberfläche wird die Infrarotstrahlung vielfach gebrochen und dadurch die Wärmestrahlung zusätzlich unterdrückt. Es ist auch möglich die Oberfläche des Gehäuses 1 mit einem Schliff auszugestalten und das Gehäuse 1 selbst als Verschluss oder Stopfen für den Rezipienten 4 zu verwenden.

Eine weitere vorteilhafte Ausführung der erfindungsgemäßen thermischen Isolierung ist dadurch gekennzeichnet, dass das Gehäuse 1 eine Öse aufweist. Mit dieser Öse kann die thermische Isolierung in einfacher Weise z. B. mit Hilfe eines metallischen Hakens in den Rezipienten 4 eingeführt bzw. aus diesem entnommen werden.

In einer vorteilhaften Art und Weise enthält die erfindungsgemäße thermische Isolierung in der Achse des Gehäuses 1 eine Durchführung. In diese Durchführung können beispielsweise Thermoelemente eingeführt werden. So kann beispielsweise die Temperatur direkt in Rezipienten 4 gemessen werden oder auch Prozessgas zu der Probe geleitet werden.

Gegenstand der vorliegenden Erfindung ist weiterhin eine Ofenanlage mit einem Rezipienten 4 enthaltend mindestens eine erfindungsgemäße thermische Isolierung an einer temperaturempfindlichen Stelle. Die erfindungsgemäße thermische Isolierung sollte in vorteilhafter Weise in unmittelbarer Nähe der temperaturempfindlichen Stelle angeordnet sein, um eine optimale thermische Isolierung zu erreichen, wobei zusätzlich mit steigendem Volumen des Gehäuses 1 eine steigende Wärmedämmung erreicht wird.

In vorteilhafter Weise kann an einer zweiten temperaturempfindlichen Stelle ebenfalls eine erfindungsgemäße thermische Isolierung angeordnet werden.

Es ist weiterhin vorteilhaft, dass weitere thermische Isolierungen innerhalb des Rezipienten 4 angeordnet werden und zwar sowohl innerhalb als auch außerhalb des Ofens 5, die zur Erhöhung der Wärmeisolation beitragen. Je nachdem wie weit die Temperatur an der temperaturempfindlichen Stelle durch die thermische Isolierung heruntergesetzt werden soll, können 1 bis mehrere (z. B. 4-6) erfindungsgemäße thermische Isolierungen eingesetzt werden bzw. das Volumen des Gehäuses 1 so vergrößert oder verkleinert werden, dass die gewünschte Wärmedämmung erreicht wird.

Die folgende Tabelle zeigt beispielhaft die Temperaturen an den Verbindungsstellen mit und ohne die erfindungsgemäße Isolierung bei einer Probentemperatur im Rezipienten 4 von ca. 800°C:

| | Temperatur gemessen an Verbindungsstelle [°C] |
|---|---|
| Anordnung ohne erfindungsgemäße thermische Isolierung | 300 -400 |
| Anordnung mit evakuiertem Quarzglasgehäuse | 200 -250 |
| Anordnung mit evakuiertem Quarzglasgehäuse + Keramikwolle | 100 -200 |
| Anordnung mit evakuiertem Quarzglasgehäuse + Keramikwolle + glasperlgestrahlter Oberfläche | 30 -50 |

## Patentansprüche

1. Thermische Isolierung,
**gekennzeichnet durch** ein evakuiertes Gehäuse (1) aus hitzbeständigem inertem Material, das zur thermischen Isolierung innerhalb eines Rezipienten (4) mit seiner äußeren Formgebung an die innere Formgebung des Rezipienten (4) angepasst ist.

2. Thermische Isolierung nach Anspruch 1
**gekennzeichnet durch**,
eine kugel- oder zylinderförmige Formgebung des Gehäuses (1).

3. Thermische Isolierung nach einem der Ansprüche 1 bis 2,
**gekennzeichnet durch** eine teilweise oder komplette Füllung des Gehäuses (1) mit Isolierwolle (3).

4. Thermische Isolierung nach einem der Ansprüche 1 bis 3,
**gekennzeichnet durch** eine teilweise oder komplette Füllung des Gehäuses (1) mit Keramikwolle oder Quarzglaswolle.

5. Thermische Isolierung nach einem der Ansprüche 1 bis 4,
**dadurch gekennzeichnet, dass** die äußere Oberfläche des Gehäuses (1) aufgeraut ist.

6. Thermische Isolierung nach einem der Ansprüche 1 bis 4,
**dadurch gekennzeichnet, dass** die äußere Oberfläche des Gehäuses (1) glasperlgestrahlt oder sandgestrahlt ist oder einen Schliff aufweist.

7. Thermische Isolierung nach einem der Ansprüche 1 bis 6,
**dadurch gekennzeichnet,**
**dass** das Gehäuse (1) eine Öse aufweist.

8. Thermische Isolierung nach einem der Ansprüche 1 bis 7,
**dadurch gekennzeichnet,**
**dass** die Achse des Gehäuses (1) eine Durchführung aufweist.

9. Ofenanlage mit einem Rezipienten (4) enthaltend mindestens eine thermische Isolierung gemäß einem der Ansprüche 1 bis 8 innerhalb des Rezipienten (4).

10. Ofenanlage gemäß Anspruch 7, enthaltend mindestens zwei thermische Isolierungen gemäß einem der Ansprüche 1 bis 8.

11. Ofenanlage gemäß einem der Ansprüche 7 oder 8, enthaltend thermische Isolierungen gemäß einem der Ansprüche 1 bis 8 innerhalb des Rezipienten (4) und zwar sowohl innerhalb als auch außerhalb des Ofens (5).
